# EUROPEAN PATENT APPLICATION

(11) **EP 1 520 739 A2**
(43) Date of publication of application: **06.04.2005**
(21) Application number: 04380196.8
(22) Date of filing: 29.09.2004
(51) Int. Cl.: B60J 1/17, B60J 5/04

(54) **Rail for power window devices for motor vehicles**

(30) Priority: 02.10.2003 ES 200302215 U
(71) Applicant: Daumal Castellon, Melchor, 08013 Barcelona (ES)
(72) Inventor: Daumal Castellon, Melchor, 08013 Barcelona (ES)
(74) Representative: Morgades Manonelles, Juan Antonio

(57) **Abstract**

The rail (1) comprises a section member having a lower fastening portion (3) and an upper fastening portion (2) for engaging said section member to the door (4) and comprising a fastening support (5) having at least a length (6) fixed to the rail (1), a length (7) fixed to the vehicle door (4) and an intermediate length (8) substantially sloped relative to the vertical.

The fastening support (5) may be made deformable for adjusting the lower fastening portion (3) of the rail (1) once position thereof has been fixed in said upper fastening portion (2).

The invention provides an elastic and resistant fastening of the rail (1) allowing for the balance of the vertical operating loads.

## Description

The present invention relates to a power window device for motor vehicles and, more particularly, to the rail of the power window device.

As it is known, the rails of the power window systems in motor vehicles are provided with a slider which slides therealong attached to the lower edge of a window pane of the motor vehicle door. Said slider is driven through a driving cable by means of an electric motor or a manually operable crank handle.

The rails of the power window devices may have the ability of being rotated so that they can be appropriately adapted to the final position with a certain degree of flexibility in the assembly processes. Such rotating ability is carried out so that the inner end of the rail may be slightly pivoted, while the upper end is fixed to the inner panel of the vehicle door.

The present invention is directed for improving the upper anchorage of the rail of the power window devices so that disadvantages usually arisen in said points of anchorage derived from bending loads especially in a vertical direction may be overcome.

A section member is provided having an upper fastening portion adapted to attach the rail section member of the power window device to the vehicle door. The main feature of said fastening portion is that it is provided with a fastening support generally comprising at least a length attached to the rail, a length attached to the vehicle door and an intermediate length substantially sloped relative to the horizontal. Said intermediate length that joins both said lengths is sloped at an angle ranging from 45° to 60° relative to the vertical so that an elastic, but at the same time resistant to the operating vertical loads, is thus obtained. Said fastening support of the rail of the power window device may be made of a metal sheet having a thickness ranging from 1.5 to 2 mm.

A flexible and resistant attachment with a reduced cost is thus obtained. Furthermore, when regulation of the power window assembly is carried out at the inner portion thereof by rotation around the upper end, the fastening support will be flexed thus adapting the rail to the path. The regulating operation is readily carried out due to the fact that the upper anchorage is of an elastic nature. This solution is more advantageous than the conventional superior anchorages in which a screw is used, said screw being subsequently screwed after carrying out the regulation at the lower portion of the power window device. With the support member of the invention, however, the power window device may be left fixed and pressed at the upper anchorage portion and then the regulation of the power window device may be carried out.

The features and the advantages of the rail of the present invention will be clearer from the detailed description of a preferred embodiment thereof that will be given hereinafter by way of a non limitative example, with reference to the drawings, in which:
Fig. 1 is an elevation view of the rail of a power window device according to the invention; and
Fig. 2 is an enlarged view of the fastening support of the rail of the power window device.

Reference numerals used to define the different parts in the embodiments of the invention are as follows:
(1) rail of the power window device;
(2) rail fastening upper portion;
(3) lower anchorage plate;
(4) vehicle door;
(5) fastening support;
(6) fastening support lower length;
(7) fastening support upper length;
(8) fastening support intermediate length;
(Y) horizontal axis;
(Z) vertical axis; and
(α) sloping angle of the intermediate length.

The rail (1) of the power window device comprises a metal section member with a lower anchorage plate (3) which may be adjusted on an axis (Y) and a rail fastening upper portion (2) properly adapted for engaging the section member of the rail (1) of the power window device to the vehicle door (4).

As it can be seen, a fastening support (5) is provided at the fastening upper portion (2) that is made of a steel plate having a thickness of about 2 mm. The fastening support (5) comprises a lower length (6) fixed to the rail (1), an upper length (7) fixed to the vehicle door (4) and an intermediate length (8). The intermediate length (8) is slightly sloped relative to the vertical at an angle (α). The sloping angle (α) of the intermediate length (8) is defined by the plane of said length (8) and the vertical axis (Z) of the door panel and lies in the range of 45° to 60°.

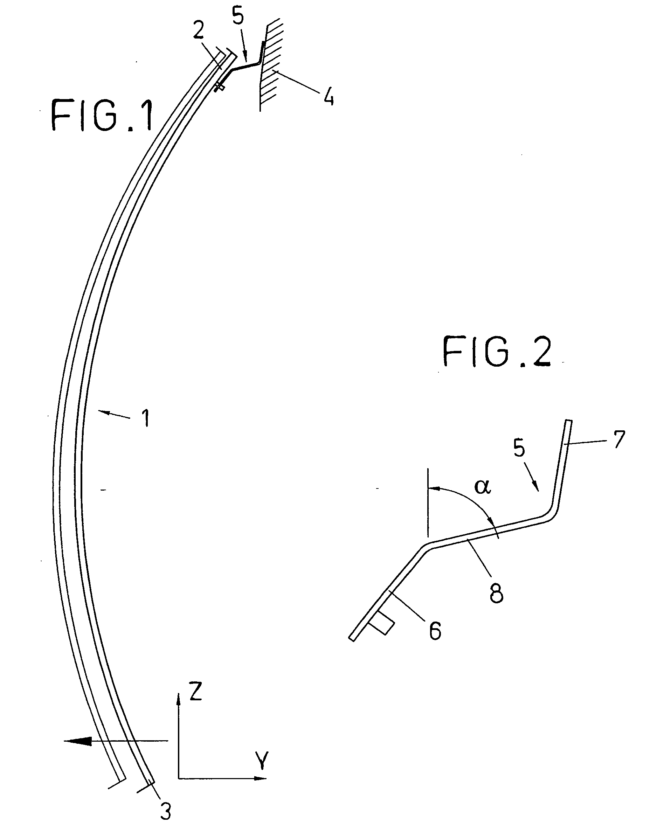

The fastening support (5) is deformable and serves the purpose of allowing for adjusting the lower fastening portion of the rail (1) once position thereof has been fixed in said upper fastening portion (2), as it may be seen from Fig. 1 wherein the movement of the rail (1) is shown in an adjusting operation of the lower end thereof as shown by the arrow.

With the configuration as herein described an elastic and resistant fastening of the rail (1) is obtained allowing for the balance of the vertical operating loads.

Once having been sufficiently described what the rail for power window devices for motor vehicles of the present invention consists in accordance to the enclosed drawings, it is understood that any detail modification can be introduced as appropriate, provided that variations may alter the essence of the invention as summarised in the appended claims.

## Claims

1. Rail for power window devices for motor vehicles comprising a section member having a lower fastening portion and an upper fastening portion (2) adapted for engaging said section member to the door (4) of the vehicle, **characterized in that** said fastening portion (2) comprises a fastening support (5) having at least a length (6) fixed to the rail (1), a length (7) fixed to the door (4) of the motor vehicle and an intermediate length (8) substantially sloped relative to the vertical.

2. Rail for power window devices for motor vehicles as claimed in claim 1, **characterized in that** said intermediate length (8) is sloped at an angle (α) ranging from 45° to 60° relative to the vertical.

3. Rail for power window devices for motor vehicles as claimed in claim 1, **characterized in that** said fastening support (2) is made of a metal sheet having a thickness ranging from 1.5 to 2 mm.

4. Rail for power window devices for motor vehicles as claimed in claim 1, **characterized in that** said fastening support (2) is deformable and it serves the purpose of allowing for adjusting the lower fastening portion of the rail (1) once position thereof has been fixed in said upper fastening portion (2).
